# EUROPÄISCHE PATENTSCHRIFT

(11) **EP 0 886 590 B1**
(45) Veröffentlichungstag und Bekanntmachung des Hinweises auf die Patenterteilung: **19.09.2001**
(21) Anmeldenummer: 97953703.2
(22) Anmeldetag: 26.11.1997
(51) Int. Cl.: B60R 19/22, C08J 9/232

(54) **STOSSDÄMPFER**
BUMPER
ABSORBEURS DE CHOCS

(30) Priorität: 26.11.1996 DE 19648804
(43) Veröffentlichungstag der Anmeldung: 30.12.1998
(73) Patentinhaber: Gefinex Gesellschaft für Innovative Extrusionsprodukte mbh, 33803 Steinhagen (DE)
(72) Erfinder: LANDVIK, Dag, S-139 22 Värmdö (SE); BRUNING, Jürgen, D-33824 Werther (DE)
(74) Vertreter: Kaewert, Klaus
(86) Internationale Anmeldenummer: EP9706599
(87) Internationale Veröffentlichungsnummer: WO9823467

(56) Entgegenhaltungen:
- EP-A- 0 192 109
- EP-A- 0 266 642
- EP-A- 0 595 607
- WO-A-94/14629
- DE-A- 4 307 648
- DE-A- 4 432 082
- DE-A- 4 432 764
- GB-A- 2 080 813
- US-A- 4 598 001
- US-A- 4 695 593
- PATENT ABSTRACTS OF JAPAN vol. 008, no. 216 (M-329), 3.Oktober 1984 & JP 59 100032 A (NITSUSAN SHIYATAI KK), 9.Juni 1984,

## Beschreibung

Die Erfindung betrifft Stoßdämpfer für Kraftfahrzeuge, insbesondere für Stoßstangen/Stoßfänger und zumindest teilweise bestehend aus Kunststoff.
Vor allem die Ansprüche an Stoßstangen haben sich in der Vergangenheit stark geändert. Während früher geringe Rückstellkräfte der Stoßstangen in Kauf genommen worden sind, sollen zeitgemäße Stoßstangen in der Regel bei einem ungebremsten Aufprall auf ein unnachgiebiges Hindernis aus einer Geschwindigkeit von 5 km pro Stunde und mehr nicht nur die Fahrzeugkarosse schützen, sondern den Stoß auch noch unbeschadet überstehen. Das gilt für Personenkraftwagen.

*Es sind verschiedene Lösungsvorschläge gemacht worden, die Fahrzeugkarosse bei einem derartigen Aufprall zu schützen. Die US-4598001 A zeigt Stoßdämpferkerne für Stoßfänger/Stoßstangen gemäß dem Oberbegriff des Anspruchs 1. Im einzelnen ist das wie folgt beschrieben:*
*Ein Stoßdämpferkern ist geformt worden, der für die Herstellung von Energie absorbierenden Fahrzeugstoßdämpfern geeignet ist. Das geschieht in Übereinstimmung mit einem Ausdehnungs-Verformungsverfahren, wobei die Formteile an ihren Endflächen in Längsrichtung zu einem Gesamtformteil zusammengefügt werden. Die Stoßdämpferkerne werden so geformt, daß sie mit Teilen übereinstimmen, die dadurch anfallen*, *daß das Gesamtformteil durch eine Längsteilung in mindestens zwei Teile geteilt wird. Für die Stoßdämpferkerne ist eine hohe Abmessungsgenauigkeit von Vorteil.*

*Eine Praxisbedeutung dieses Vorschlages ist nicht erkennbar.*

*Auch die Erfindung hat sich die Aufgabe gestellt, eine Aufpralldämpfung zu bewirken.* Dies wird das mit Hilfe einer Verformungsschicht und einer aufprallseitig angeordneten, nachgiebigen Kraftübertragungsschicht erreicht.
Die Verformungsschicht besteht aus Kunststoffschaum geringen Raumgewichtes und verformt sich bei dem Aufprall. Dadurch wird die eingeleitete Energie teilweise vernichtet und im übrigen gleichmäßig in die Karosse eingeleitet, so daß optimale Voraussetzungen für den Schutz der Karosse entstehen. Die Verformungskraft der Verformungsschicht ist so groß, daß sie ausreicht, um das Kraftfahrzeug durch seine Verformung aus der vorgegebenen Geschwindigkeit zum Stillstand zu bringen.
Die Kraftübertragungsschicht verteilt die Aufprallkraft großflächig auf die Verformungsschicht, so daß trotz der aus dem geringen Raumgewicht des Schaumstoffes für die Verformungsschicht resultierenden großen Nachgiebigkeit eine ausreichende Dämpfungskraft aufgebracht wird. Zugleich ist die Rückstellkraft der Kraftübertragungsschicht so groß, daß sie bei allen vorkommenden Aufprallsituationen im vorgesehenen Rahmen in ihre Ausgangsform zurückfindet. Das gilt auch für den schwierigen Fall einer nahezu linienförmigen Belastung, wie sie z.B. bei einem Aufprall auf eine Ecke entsteht.

Dementsprechend besteht die Kraftubertragungsschicht aus einem Kunststoffschaum sehr viel höherer Festigkeit als die Verformungsschicht Geeignete Materialien für derartige Schichten sind Kunststoffschäume aus Polypropylen. Der Schaum für die Verformungsschicht hat ein Raumgewicht von 10 bis 49 kg pro Kubikmeter; der Schaum für die Kraftübertragungsschicht hat, gemäß der Erfindung, ein Raumgewicht von mindestens 151 kg pro Kubikmeter. In der Regel liegt das Raumgewicht der Kraftübertragungsschicht zwischen 151 und 500 kg pro Kubikmeter. Desgleichen sind Polyethylen und/oder Polystyrol als Kunststoffe geeignet Das gilt auch für Kunststoffe aus Bestandteilen von Polyethylen und/oder Polystyrol und/oder Polypropylen.
Die Kraftübertragungsschicht hat vorzugsweise eine Dicke von höchstens 25 mm, die Verformungsschicht eine Dicke bis 200 mm.

Die Kraftübertragungsschicht erstreckt sich aufprallseitig an der ganzen Länge der Stoßstange bzw des Stoßdämpfers. Die Verformungsschicht kann sich gleichfalls über die ganze Länge der Stoßstange hinter der Kraftübertragungsschicht erstrecken Sie kann sich aber auch teilweise über die Länge erstrecken.
Darüber hinaus kann eine Schicht in die andere greifen oder konnen beide Schichten ineinandergreifen. Eine Verzahnung der Schichten eröffnet völlig neue Verformungsmöglichkeiten. Das heißt, durch Ausnehmungen in der Kraftübertragungsschicht, in denen sich Material der Verformungsschicht befindet, kann das Verformungsverhalten, z B. das Einknicken der Wände kontrolliert nachgiebig gestaltet werden. In diesem Sinne können die Wände der Kraftubertragungsschicht trotz der Verwendung von Kunststoffschaum relativ dünn sein, z.B. 10 mm und kleiner.
Wahlweise besitzt die Kraftübertragungsschicht eine Vielzahl nebeneinander liegender Ausnehmungen und beschränkt sich die Verformungsschicht darauf, daß die Ausnehmungen mit Elementen gefüllt werden. Dann besteht die Verformungsschicht aus nebeneinander angeordneten Elementen.
Die Elemente können keilförmig und/oder zylindrisch und/oder quaderforming und/oder kegelformig und/oder pyramidenförmig ausgebildet sein.

Von Vorteil ist, wenn die Verformungsschicht und die Kraftubertragungsschicht miteinander verklebt oder verschweißt sind Zum Verkleben eignet sich Heißkleber Das Verschweißen kann auf vielfältige Form erfolgen. Zum Teil sind Art und Umfang des Verschweißens von Form und Werkstoff beider Schichten abhängig.

Beide Schichten können auch als Kunststoffschaum in einer Spritzform hergestellt werden. Dabei findet ein Formteilautomat Verwendung, in den der mit einem Treibmittel versetzte Kunststoff in entsprechender Dosierung und unter ausreichend hohem Druck in den Formteilautomaten eingespritzt wird, so daß sich in dem Formhohlraum des Formteilautomaten ein Kunststoffschaum bildet. Die Spritzformen bieten sich besonders bei hohen Stückzahlen an. Nach dem Spritzen müssen die Formteile noch einige Zeit bis zur ausreichenden Abkühlung in der Form verbleiben. Die Zeit vom Füllen der Form bis zur Entleerung der Form (Herausnehmen des fertigen Formteiles) wird als Zykluszeit bezeichnet.
Die Zykluszeiten beim Spritzen von Kunststoffschaum sind beachtlich Schneller arbeitet ein Formteilautomat mit sogenannten Beads.

Beads sind Kunststoffschaumpartikel, die auf verschiedenen Wegen hergestellt werden können. Ein Herstellungsweg verwendet einen Autoklaven. Darin werden die Beads unter Druck, Temperatur und ständiger Bewegung des Bades in einer Suspension mit Treibmittel versetzt. Oder die Beads werden so hergestellt, daß sie einen Treibmittelbestandteil aufweisen. Durch schlagartige Entleerung des Autoklaven in ein Gefäß mit vergleichsweise geringem Druck kommt es zu einem Aufschäumen der Beads.

Ein anderer Weg zur Herstellung der Beads geht von einem Extruder aus. Mit Hilfe eines Extruders wird Kunststoff plastifiziert und unter Zumischung von Treibmittel homogenisiert, um dann aus einer Düse mit vielen kleinen nebeneinander liegenden Löchern in Form von dünnen Kunststoffschaumsträngen auszutreten. Die Kunststoffschaumstränge werden durch eine Granulierungseinrichtung unmittelbar bei ihrer Entstehung zerkleinert.

Diese Beads werden nach einem bekannten Verfahren unter Druck in den Formhohlraum des Formteilautomaten gefüllt. Danach wird Heißdampf mit entsprechendem so lange durch die Form gedrückt, bis die gewünschte Erwärmung entstanden ist. Der für die Verschweißung von Beads aus Ethylen-Propylen-Block-Copolymer erforderliche Druck liegt bei 3 bis 8 bar, vorzugsweise 6 bar und einer Temperatur von 140 bis 175 Grad Celsius, vorzugsweise 160 Grad Celsius. Der dazu erforderliche Heißdampf ist ein überhitzter Dampf, der infolge seines Druckes die gewünschte Temperatur aufweisen kann.
Der Heißdampf erwarmt die Beads an ihrer Oberflache bis zur Erweichung Zugleich bewirkt die Erwärmung eine Expansion der Beads. Je nach Druck und Temperatur kommt es zu einer Versinterung oder einer Verschweißung. Beim Versintern ist die Temperatur geringer und dafür der Druck höher. Beim Verschweißen ist die Temperatur höher und dafür der Druck geringer Allgemein werden beim Verschweißen höhere Festigkeiten als beim Versintern erzielt.
Außerdem sieht die Heißdampftechnik vorzugsweise vor, daß die Beads bereits mit entsprechendem Druck in den Formhohlraum gefüllt werden. Vor der Beaufschlagung mit Heißdampf wird die Form ganz mit Beads gefüllt, um Kurzschlußströmungen des Heißdampfes in dem Formhohlraum zu vermeiden.

Vorteilhaft kann auch eine Verschweißung der Beads mit Hilfe von Mikrowellen sein. Die Beads sind mangels ausreichender dielektrischer Eigenschaften an sich nicht aktiv, d.h reagieren nicht im wesentlichen Umfang auf Mikrowellen. Deshalb werden die Beads vor ihrem Einfüllen in die Form mit einem aktiven Material, also einem auf Mikrowellen reagierenden Material beschichtet oder benetzt. Als aktives Material ist z.B. Wasser geeignet. Beste Ergebnisse stellen sich mit einem oberflächenentspannten Wasser ein. Die Oberflächenentspannung kann mit Tensiden, im einfachsten Fall mit einem Haushaltsspulmittel erzielt werden.

Das an den Beads haftende Wasser wird in dem Formteilautomaten/Form mit Hilfe der Mikrowellen erwärmt, bis es verdampft. Die Verdampfung/Erwarmung wird bis zu einem Druck fortgesetzt, bei dem die für die Erweichung der Beadsoberfläche notwendige Temperatur gegeben ist.

Vorteilhafterweise kann mit der Mikrowellenverschweißung von einem Vorschäumen der Beads abgesehen werden, das bei dem oben erläuterten Heißdampfverfahren erforderlich ist, wenn die Beads aus Transportgründen und Lagerhaltungsgründen als Mikro-Beads oder sogenannte Schrumpel-Beads angeliefert werden.

Bei der Heißdampftechnik wird der Formhohlraum beim Eindüsen von Heißdampf vollstandig gefüllt, weil der Heißdampf sonst in den vorhandenen Hohlräumen an den Beads vorbeistreicht, ohne die gewünschte Wirkung zu entfalten.
Bei dem Verschweißen mit Mikrowellen ist das'anders. Durch die Mikrowellen entsteht die Erwärmung gezielt an jeder Oberfläche eines mit den Mikrowellen in Berührung kommenden Beads. Das erlaubt es, die Form nur teilweise zu füllen.
Bei Verwendung von Polypropylen-Schrumpel-Beads führt die Erwärmung bei Durchlaufen der Temperaturzone von 95 bis 100 Grad Celsius zu einer schlagartigen Expansion der Beads und zu einer Füllung des Formhohlraumes. Die weitergehende Erwärmung bzw. Verdampfung des Wassers auf die Erweichungstemperatur der Beadsoberfläche setzt den oben beschriebenen Sinter- oder Verschweißungsvorgang in Gang.

Wasser kann auch in geforener Form eingesetzt werden. In diesem Aggregatzustand hat die Mikrowelle einen deutlich höheren Wirkungsgrad.

Statt des Wassers und/oder zusätzlich zum Wasser können auch andere polare(dielektrische Materialien) Verwendung finden. Dazu gehören z.B. Glycerin, Glykol, Wasser in Verdickung mit Kieselgur und Methylzellulose. Glycerin kann in Mischung/Lösung mit Wasser eingesetzt werden.
Das Glykol kann in Form von Ethylenglykol oder Diethylenglykol vorkommen. Beides wird als Flüssigkeit eingesetzt und verdampft bei 240 Grad Celsius wie Wasser.

Flüssigmittel werden unter Benetzung der Beads bzw. des zu verschweißenden Kunststoffschaumes eingesetzt.
In einigen Fällen ist eine dickere Schicht wirkungsvoller als eine bloße Benetzung.

Es ist günstig, die Kraftübertragungsschicht aufprallseitig, das ist zugleich außenseitig, zu verhauten oder zu beschichten. Das gilt besonders für Stoßstangen aus Beads. Sonst können einzelne Beads an der Oberfläche erkannt werden. Das Verhauten ist ein weitergehendes Anschmelzen der Oberfläche der Kraftübertragungsschicht. Dabei entsteht ein einheitliches Oberflachenbild.

Durch Auflaminieren bzw. Aufschweißen einer Folie kann der gleiche optische Erfolg erreicht werden. Das Auflaminieren bzw. Aufschweißen einer Folie hat darüber hinaus den Vorteil, daß eine für ein späteres Aufbringen von Lack besonders geeignete Folie verwendet werden kann. Auch die Folie kann mit Mikrowelle verschweißt werden.

Vorzugsweise wird für alle Schichten und für die Folie das gleiche Material verwendet, so daß die Stoßstange bzw. der Stoßdämpfer als einstofflich zu bezeichnen ist. Das hat große Verarbeitungs- und Entsorgungsvorteile.

In der Zeichnung ist ein Ausführungsbeispiel der Erfindung dargestellt.

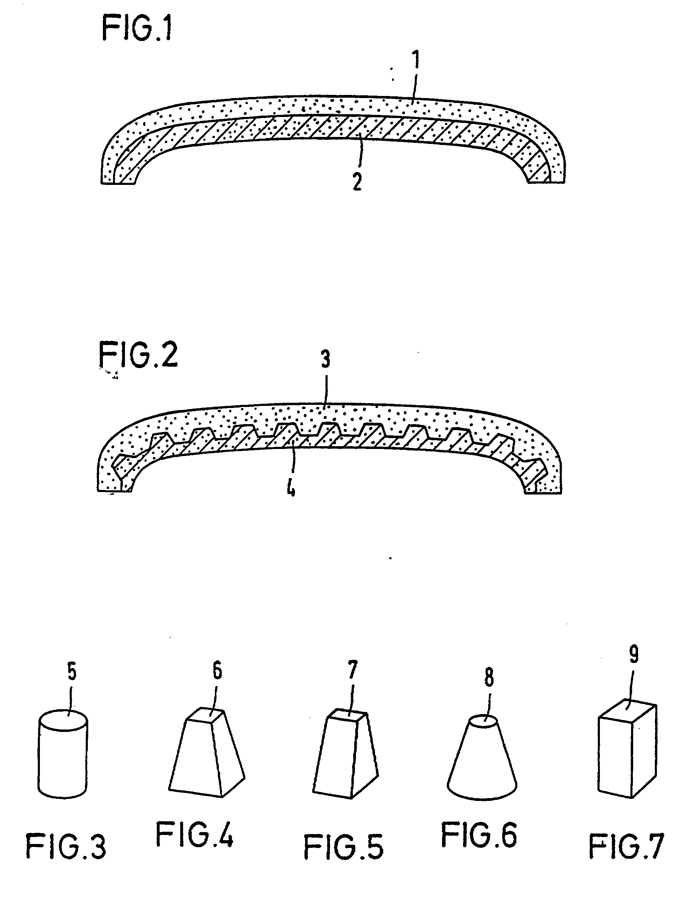

Fig. 1 zeigt eine Stoßstange für einen Pkw. Die Stoßstange besitzt eine außenseitige und aufprallseitige Kraftübertragungsschicht 1 aus Kunststoffschaum, die außen in nicht dargestellter Form mit einer Folie beschichtet ist. Ferner gehört zur Stoßstange eine Verformungsschicht 2 aus Kunststoffschaum. Während der Kunststoffschaum der Schicht 2 ein Raumgewicht von 30 kg pro Kubikmeter aufweist, besitzt der Kunststoffschaum der Schicht 1 ein Raumgewicht von 200 kg pro Kubikmeter. Beide Schäume sind Polypropylenschäume.

Die Kunststoffschaumschichten 1 und 2 sind im Ausführungsbeispiel separat in Formteilautomaten aus Kunststoffschaum-Beads hergestellt worden. Ausgangswerkstoffe sind Schrumpelbeads. Die Schrumpelbeads sind aus normalen, durch Extrusion und Granulierung entstanden Beads erzeugt worden. Dazu sind die Beads in einem Wasserbad wärmebehandelt worden. Durch die Erwärmung sind die den Beads enthaltenen Treibmittel schneller aus den Beads herausdiffundiert als Luft nachströmen kann. Der Luftdruck hat die Beadswandungen eingedrückt, so daß die Beads an der Oberflache Einfaltungen erfahren.

Die Schrumpelbeads sind extrem kleinvolumig. Bei der Herstellung der Schichten 1 und 2 sind soviel Beads in den Formhohlraum eingefüllt worden, daß das Gewicht der Beadsfüllung gleich dem gewünschten späteren Raumgewicht ist.

Die Beads werden durch Mikrowellen miteinander verschweißt. Dazu werden die Beads vor dem Einfüllen in den Formteilautomaten mit oberflachenentspanntem Wasser benetzt. Zur Oberflächenentspannung ist das Wasser mit Haushalts-Spülmittel versetzt worden.

In der Form werden die Beads den Mikrowellen ausgesetzt, bis das sich erwärmende Wasser verdampft ist und sich bei etwa entsprechendem Druck die gewünschte Temperatur einstellt. Bei Polypropylen können das 6 bis 7,5 bar eine Temperatur von 160 bis 175 Grad Celsius sein Druck und Temperatur werden solange gehalten, bis die Beads an ihrer Oberfläche miteinander verschweißt sind.

Beide Schichten werden nach ihrer Herstellung mittels Mikrowellen miteinander verschweißt. Dazu werden die Schweißflächen wiederum mit Kohlenstaub als aktivem Material bestäubt und anschließend den Mikrowellen ausgesetzt.

Die Fig. 2 zeigt eine weitere erfindungsgemäße Stoßstange für einen Personenkraftwagen mit einer Kraftübertragungsschicht 3 und einer Verformungsschicht 4. Beide Schichten 3 und 4 unterscheiden sich dadurch, daß sie ineinandergreifen. Im Ausführungsbeispiel ist eine Verzahnung vorgesehen.
An der Innenseite der Stoßstange, d.h. an der Schicht 4, sind nicht dargestellte Anschlüsse zur Befestigung vorgesehen. Dabei handelt es sich um ansgeschweißte Bleche mit Gewindebohrungen. Zum Anschweißen sind die Bleche mit verschweißfähigem Kunststoffmaterial beschichtet/kaschiert. Alternativ können die Anschlüsse auch angeklebt werden.
Wahlweise sind die Stoßstangen an die Karosserie angeklebt.
In anderen Ausführungsbeispielen sind die Anschlüsse eingeformt oder ist an der Stoßstange eine Ausformung oder Einformung vorgesehen. In die Einformung kann ein Karosserieteil eindringen bzw. die Stoßstange kann auf korrespondierende vorragende Teile der Karosserie aufgesteckt werden. Umgekehrt kann die Stoßstange mit einer Ausformung versehen sein und mit einer Einwärtswölbung der Karosserie zusammenwirken. Die Steckverbindung kann ausreichen, um die Stoßstange zu befestigen. In anderen Ausführungsbeispielen ist die Stoßstange bei dieser Art der Befestigung zusätlich durch Verschraubung oder Verklebung oder durch ergänzende mechanische Klemmung gesichert. Die mechanische Klemmung kann durch Verspannung auseinander stehender Karosserieteile erfolgen, wenn diese Karosserieteile eine Ausformung der Stoßstange umschließen.

In anderen Ausführungsbeispielen mit Karosserieteilen, die in eine Einwärtswölbung der Stoßstange greifen, können die Karosserieteile z.B. mit Schrauben, Keilen und dergleichen auseinander gedrückt werden.

Nach den Fig. 3 bis 7 sind anstelle der Zähne andere Elemente vorgesehen. Nach Fig 3 haben die Elemente eine zylindrische Form 5, nach Fig 4 eine Pyramidenform 6, nach Fig. 5 eine Keilform 7, nach Fig. 6 eine Kegelform 8 und nach Fig. 7 eine Quaderform 9.
Die Elemente 5 bis 9 können in unterschiedlicher Form oder in gleicher Form nebeneinander angeordnet in die Kraftübertragungsschicht greifen. Dabei sind die Elemente 5 bis 9 entweder rückseitig über einen Materialstreifen miteinander verbunden oder sitzen die Elemente 5 bis 9 separat nebeneinander.

## Patentansprüche

1. Stoßdämpfer für Kraftfahrzeuge, insbesondere Stoßstangen/Stoßfänger und zumindest teilweise bestehend aus Kunststoff, umfassend eine Verformungsschicht (2,4) aus Kunststoffschaum geringes Raumgewichtes und eine aufprallseitig angeordnete, nachgiebige Kraftübertragungsschicht (1,3), wobei der Verformungsweg der Verformungschicht (2,4) mindestens ausreicht, um das Kraftfahrzeug aus einer Geschwindigkeit von 5 km pro Stunde ungebremst zum Stillstand zu bringen, **dadurch gekennzeichnet, daß** die Rückstellkraft der Kraftübertragungsschicht (1,3) groß genug ist, um nach einer reversiblen Verformung in die Ausgangsform zurückzufinden,
die Verformungsschicht (2,4) ein Raumgewicht von 10 bis 49 kg pro Kubikmeter hat und die Kraübertragungsschicht ein Raumgewicht von mindestens 151 kg pro Kubikmeter hat.

2. Stoßdämpfer nach Anspruch 1, **gekennzeichnet durch** eine außenseitig aufgeschweißte Kunststoff-Folie.

3. Stoßdämpfer nach Anspruch 1 oder 2, **gekennzeichnet durch** die Verwendung von Polypropylen und/oder Polyethylen und/oder Polystyrol und/oder einem Kunststoff mit Bestandteilen davon.

4. Stoßdämpfer nach einem der Ansprüche 1 bis 3, **gekennzeichnet durch** die Verwendung gleichen Materials für alle Schichten.

5. Stoßdämpfer nach einem der Ansprüche 1 bis 4, **gekennzeichnet durch** Wandstärken der Kraftübertragungsschicht (1,3) von 25 mm und weniger.

6. Stoßdämpfer nach einem der Ansprüche 1 bis 5, **gekennzeichnet durch** Wandstärken der Verformungsschicht bis 200mm.

7. Stoßdämpfer nach einem der Ansprüche 1 bis 6, **gekennzeichnet durch** die Verwendung von Beads mit einem Durchmesser von 1 bis 6 mm.

8. Stoßdämpfer nach einem der Ansprüche 1 bis 7, **gekennzeichnet durch** die Verwendung von vorgeschäumten Beads für die Verformungsschicht und nicht vorgeschäumten Beads für die Kraftübertragungsschicht.

## Claims

1. Impact absorber for motor vehicles, in particular bumpers/fenders, and composed at least partially of plastic, comprising a deformation layer (2, 4) of foam plastic of low weight per unit volume and a flexible force transmission layer (1, 3) arranged on the impact side, the deformation travel of the deformation layer (2, 4) being at least sufficient to bring the vehicle to a halt without braking from a speed of 5 km per hour, **characterised in that** the restoring force of the force transmission layer (1, 3) is large enough to return it to the original shape after a reversible deformation, the deformation layer (2, 4) has a weight per unit volume of 10 to 49 kg per cubic metre, and the force transmission layer has a weight per unit volume of at least 151 kg per cubic metre.

2. Impact absorber according to Claim 1, **characterised by** a plastic film welded onto the outside.

3. Impact absorber according to Claim 1 or 2, **characterised by** the use of polypropylene and/or polyethylene and/or polystyrene and/or a plastic containing these as constituents.

4. Impact absorber according to one of Claims 1 to 3, **characterised by** the use of the same material for all the layers.

5. Impact absorber according to one of Claims 1 to 4, **characterised by** wall thicknesses of the force transmission layer (1, 3) of 25 mm and below.

6. Impact absorber according to one of Claims 1 to 5, **characterised by** wall thicknesses of the deformation layer of up to 200 mm.

7. Impact absorber according to one of Claims 1 to 6, **characterised by** the use of beads with a diameter of 1 to 6 mm.

8. Impact absorber according to one of Claims 1 to 7, **characterised by** the use of pre-expanded beads for the deformation layer and beads that have not been pre-expanded for the force transmission layer.

## Revendications

1. Amortisseur de chocs pour des véhicules automobile, en particulier des barres de protection de chocs/des pare-chocs, et composés au moins en matière synthétique, comprenant une couche de déformation (2,4) en matière alvéolaire synthétique à faible poids volumique et une couche de transmission de force (1,3) déformable, disposée côté impact, la course de déformation de la couche de déformation (2,4) suffisant au moins à immobiliser sans effet de freinage le véhicule automobile en partant d'une vitesse de 5 km à l'heure, **caractérisé en ce que** la force de rappel de la couche de transmission de force (1,3) est suffisamment grande pour se replacer à la forme initiale, après un processus de déformation réversible, la couche de déformation (2,4) ayant un poids volumique de 10 à 49 kg par m³ et la couche de transmission de force ayant un poids volumique minimale de 151 kg par m³.

2. Amortisseur de chocs selon la revendication 1, **caractérisé par** une feuille de matière synthétique appliquée par soudage, en face extérieure.

3. Amortisseur de chocs selon la revendication 1 ou 2, **caractérisé par** l'utilisation de polypropylène et/ou de polyéthylène et/ou de polystyrène et/ou d'une matière synthétique avec des constituants de ceux-ci.

4. Amortisseur de chocs selon l'une des revendications 1 à 3, **caractérisé par** l'utilisation du même matériau pour toutes les couches.

5. , Amortisseur de chocs selon l'une des revendications 1 à 4, **caractérisé par** des épaisseurs de paroi de 25 mm et moins pour la couche de transmission de force (1,3).

6. Amortisseur de chocs selon l'une des revendications 1 à 5, **caractérisé par** des épaisseurs de paroi allant jusqu'à 200 mm pour la couche de déformation.

7. Amortisseur de chocs selon l'une des revendications 1 à 6, **caractérisé par** l'utilisation de perles techniques d'un diamètre de 1 à 6 mm.

8. Amortisseur de chocs selon l'une des revendications 1 à 7, **caractérisé par** l'utilisation de perles techniques pré-moussées pour la couche de déformation et de perles techniques non pré-moussées pour la couche de transmission de force.
